# EUROPÄISCHE PATENTSCHRIFT

(11) **EP 0 579 178 B1**
(45) Veröffentlichungstag und Bekanntmachung des Hinweises auf die Patenterteilung: **31.05.1995**
(21) Anmeldenummer: 93111215.5
(22) Anmeldetag: 13.07.1993
(51) Int. Cl.: B60T 11/04, F16D 65/16

(54) **Montagehilfe für Betätigungseinrichtung einer Feststellbremse**
Assembly aid for the actuating member of a parking brake
Dispositif pour faciliter le montage de l'actionneur du frein de stationnement

(30) Priorität: 17.07.1992 DE 9209637 U
(43) Veröffentlichungstag der Anmeldung: 19.01.1994
(73) Patentinhaber: LUCAS INDUSTRIES PUBLIC LIMITED COMPANY, Solihull, West Midlands B91 3TX (GB)
(72) Erfinder: Walden, Christoph, D-5477 Nickenich (DE); Stein, Walter, D-5414 Niederwerth (DE)
(74) Vertreter: Goetz, Rupert, Dipl.-Ing.

(56) Entgegenhaltungen:
- DE-A- 4 023 047
- DE-U- 8 811 920

## Beschreibung

Die Erfindung betrifft eine Fahrzeugradbremse mit einem mechanischen Stellglied, das an einem Gehäuse der Bremse gelagert, durch ein Übertragungsglied mit einem Betätigungsglied verbindbar und durch dieses für Feststellbremsungen gegen eine Rückstellkraft von einer Ausgangslage wegbewegbar ist, und mit einem Abstandhalter, der bis zur ersten mechanischen Betätigung der Bremse nach Montage des Übertragungsgliedes einen vorbestimmten Abstand des Stellgliedes von seiner Ausgangslage aufrechterhält und dabei von der Rückstellkraft auf Druck belastet ist.

Bei solchen Fahrzeugradbremsen ist der Abstandhalter ausschließlich als Montagehilfe vorgesehen; er hat die Aufgabe, das am Gehäuse der Bremse gelagerte mechanische Stellglied in einer von seiner Ausgangslage abweichenden Lage zu halten, die eine beginnende Bremsbetätigung simuliert. In dieser Lage des Stellgliedes wird die Bremse in ein Fahrzeug eingebaut und das Stellglied wird über ein Übertragungsglied mit einem Betätigungsglied verbunden. Das Übertragungsglied ist im allgemeinen ein Bowdenzug oder auch ein einfaches Zugseil, und das Betätigungsglied ist meist ein Handbremsstock. Das Übertragungsglied wird spielfrei eingestellt, solange der Abstandhalter vorhanden ist und das mechanische Stellglied in dem vorbestimmten Abstand von seiner Ausgangslage hält. Nach der Montage der Bremse wird der Abstandhalter beseitigt; dies hat zur Folge, daß die Rückstellkraft der Bremse auf das Übertragungsglied wirkt und es auch dann straffhält, wenn es sich im Laufe der Zeit längt.

Bei einer bekannten Fahrzeugbremse der eingangs beschriebenen Gattung (DE-U 8811920) ist der Abstandhalter ein ausschließlich auf Druck belastbarer Kunststoffkörper, der zwischen dem mechanischen Stellglied und einem Anschlag am Gehäuse der Bremse eingeklemmt ist und keine andere Aufgabe hat als diejenige, den vorbestimmten Abstand des Stellgliedes von seiner Ausgangslage solange aufrechtzuerhalten, bis die Gesamtanordnung aus Stellglied, Übertragungsglied und Betätigungsglied nach dem Einbau in ein Kraftfahrzeug spielfrei eingestellt worden ist. Für dieses Einstellen sind üblicherweise Gewindeverbindungen zwischen dem Übertragungsglied und dem Betätigungsglied angeordnet, die mit einem Drehmomentschlüssel kontrolliert gespannt werden sollen. In der Praxis der Serienmontage hat sich allerdings herausgestellt, daß trotz Verwendung eines Drehmomentschlüssels das Betätigungsglied gelegentlich stärker als erforderlich gestrafft wird, so daß der vorbestimmte Abstand des Stellgliedes von seiner Ausgangslage überschritten wird und dadurch ein Teil des vorgesehenen Betätigungsweges des Stellgliedes verloren geht. Wird hingegen das Übertragungsglied von vorne herein zu wenig gestrafft, und längt es sich dann im Verlauf vielfacher Benutzung, so kann es vorkommen, daß die Rückstellkraft der Fahrzeugradbremse nicht mehr wirksam ist, um die Gesamtanordung aus Stellglied, Übertragungsglied und Betätigungsglied spielfrei zu halten.

Der Erfindung liegt deshalb die Aufgabe zugrunde, die korrekte Montage der für mechanische Bremsbetätigungen, vor allem für Feststellbremsungen, erforderlichen, einer Fahrzeugradbremse in der beschriebenen Weise zugeordneten Bauteile zu erleichtern.

Die Aufgabe ist erfindungsgemäß ausgehend von einer Fahrzeugradbremse der eingangs beschriebenen Gattung dadurch gelöst, daß der Abstandhalter auch zur Übertragung von Zugkräften ausgebildet und am Stellglied sowie an einem gehäusefesten Stützglied befestigt ist und eine Sollbruchstelle aufweist, an der er bei Überschreiten einer vorbestimmten, vom Betätigungsglied über das Übertragungsglied aufbringbaren Kraft bricht und dadurch das Stellglied freigibt.

Vorteilhafte Weiterbildungen der Erfindungen ergeben sich aus den Unteransprüchen.

Ein Ausführungsbeispiel der Erfindung wird im folgenden anhand schematischer Zeichnungen mit weiteren Einzelheiten erläutert. Es zeigen:
- Fig. 1: eine in ein Fahrzeug eingebaute Bremse mit einer Vorrichtung für Feststellbremsungen,
- Fig. 2: eine Teilansicht in Richtung des Pfeils II in Fig. 1,
- Fig. 3: einen vergrößerten Ausschnitt aus Fig. 1,
- Fig. 4: die Ansicht in Richtung des Pfeils IV in Fig. III,

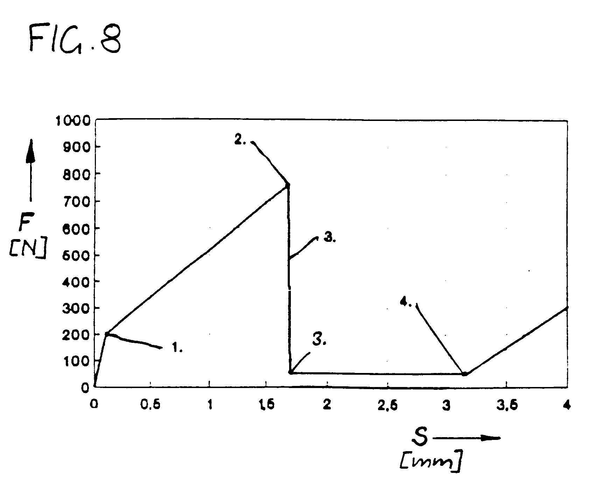

- Fig. 5: eine Teilansicht in Richtung des Pfeils V in Fig. 4,
- Fig. 6: eine vergrößerte Einzelheit aus Fig. 5,
- Fig. 7: den Schnitt VII - VII in Fig. 6 und
- Fig. 8: ein Kraft-Wegdiagramm.

Die dargestellte Bremse 10 ist eine handelsübliche Teilbelag-Scheibenbremse mit einem Gehäuse 12, das an einem Bremsträger 14 längs einer Achse A verschiebbar geführt ist.Das Gehäuse 12 gehört zu einem Schwimmsattel 16, der eine Bremsscheibe 18 sowie zwei Bremsbacken 20 und 22 übergreift. Für mechanische Betätigungen der Bremse 10 sind im Gehäuse 12 zwei Druckplatten 24 und 26 angeordnet, von denen die erste fest eingebaut ist und die zweite um die Achse A drehbar und längs dieser Achse verschiebbar gelagert ist. In den Druckplatten 24 und 26 sind einander gegenüberliegende wannenartige Vertiefungen ausgebildet, die sich bogenförmig in Umfangsrichtung erstrecken und Wälzkörper 28 aufnehmen, über welche die Druckplatten sich aneinander abstützen. Die drehbare und axial verschiebbare Druckplatte 26 stützt sich über eine selbstätige Nachstellvorrichtung 30, die eine Rückstellfeder 32 enthält, an einem hydraulischen Kolben 34 ab, der bei Betätigung die Bremsbacke 20 an die Bremsscheibe 18 anlegt. Dabei entstehen Reaktionskräfte, die den Schwimmsattel 16 in entgegengesetzter Richtung verschieben, so daß auch die Bremsbacke 22 an die Bremsscheibe 18 angelegt wird.

Die drehbare und axial verschiebbare Druckplatte 26 ist fest mit einem außerhalb des Gehäuses 20 angeordneten Stellglied 36 in Form eines Hebels verbunden. Dem Stellglied 36 benachbart ist am Gehäuse 12 ein Stützglied 38 in Form eines zweiarmigen Hebels starr befestigt. Am Stellglied 36 und am Stützglied 38 beginnt ein Übertragungsglied 40 in Form eines Bowdenzuges mit einem Seil 42, von dem ein Ende am Stellglied 36 eingehängt ist, und einem Mantel 44, von dem ein Ende am unteren Arm 46 des Stützgliedes 38 abgestützt ist. Der obere Arm 48 des Stützgliedes 38 ist für Montagezwecke durch einen Abstandhalter 50 mit dem Stellglied 36 fest verbunden.

Der Abstandhalter 50 ist ein Stanzteil aus Blech mit zwei Abschnitten, die je eine längliche Aussparung 52 bzw. 54 aufweisen. Der obere Arm 48 des Stützgliedes 38 greift in die Aussparung 52 ein und ist darin durch eine am Abstandhalter 50 ausgebildete federnde Zunge 56 spielfrei gehalten. Durch die Aussparung 54 erstreckt sich eine Schraube 58, mit der eine feste Klemmverbindung zwischen dem Abstandhalter 50 und dem Stellglied 36 derart hergestellt wird, daß das Stellglied 36 von einer neutralen Ausgangslage einen vorbestimmten Abstand einhält, der in Form eines Winkels α dargestellt ist. Die Ausgangslage des Stellgliedes 38 ist diejenige, bei der die Wälzkörper 28 an den tiefsten Stellen der sie aufnehmenden Aussparungen in den Druckplatten 24 und 26 liegen und somit nicht im Stande sind, die Kraft der Rückstellfeder 32 in ein auf die drehbare Druckplatte 26 wirkendes Drehmoment umzusetzen. Der Abstandhalter 50 hat zwischen seinen beiden mit je einer der Aussparungen 52 und 54 versehenen Abschnitten eine Sollbruchstelle 60.

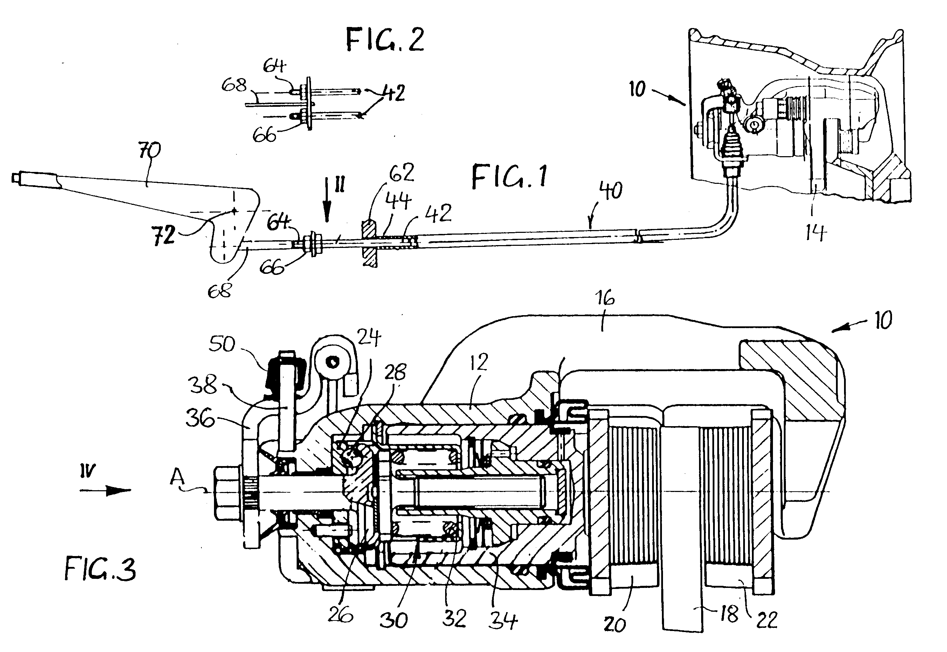

Das Übertragungsglied 40 erstreckt sich von der Bremse 10 zu einem Karosserieteil 62, an dem der Mantel 44 abgestützt ist, während das Seil 42 über eine Gewindestange 64 mit Einstellmutter 66 an einem Joch 68 befestigt ist. An dem Joch 68 ist, wie in Fig. 2 angedeutet, ein weiteres Seil 42 befestigt, das zu einem Übertragungsglied zum Betätigen einer weiteren, nicht dargestellten Bremse 10 gehört. Das Joch 68 ist gelenkig mit einem Betätigungsglied 70 verbunden, das im dargestellten Beispiel ein um einen karosseriefesten Punkt 72 schwenkbarer Handbremsstock ist.

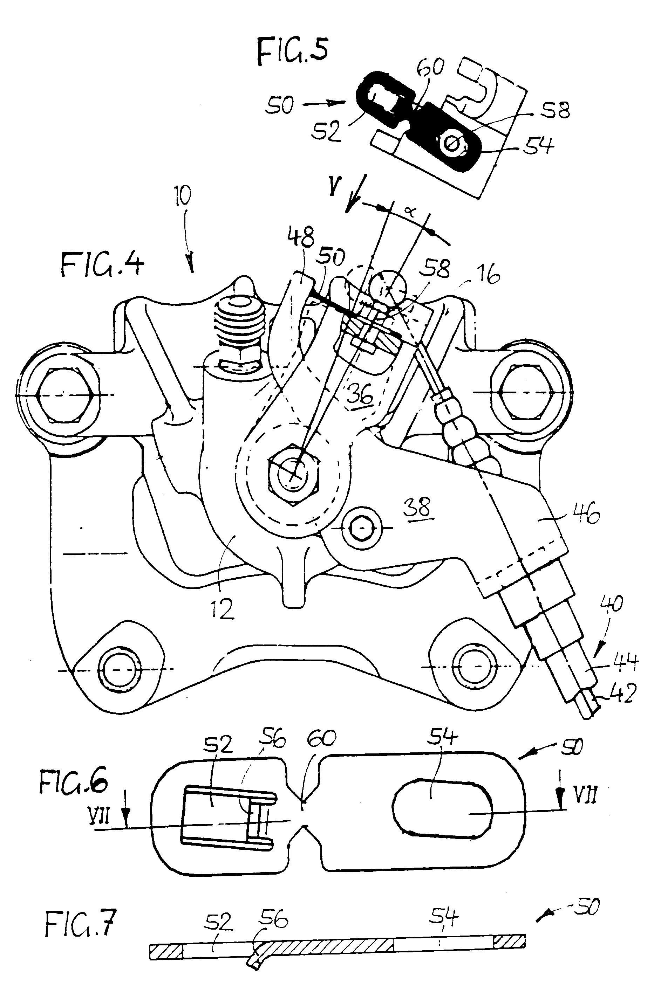

Wenn zwei Bremsen 10, beispielsweise als Hinterradbremsen, in ein Fahrzeug eingebaut worden sind, werden ihre Stellglieder 36 mittels je eines Übertragungsgliedes 40 mit dem Joch 68 und über dieses mit dem Betätigungsglied 70 verbunden. Jedes der Stellglieder 36 ist mit einem Abstandhalter 50 am zugehörigen Stützglied 38 befestigt und somit in Bezug auf die oben definierte Ausgangslage in einem Abstand gehalten, der dem Winkel α in Fig. 4 entspricht. Zum Straffen der Übertragungsglieder 40 werden nun die Einstellmuttern 66 mit einem Drehmomentschlüssel angezogen; dabei wird das Betätigungsglied 70 mit einer Handkraft von etwa 100N in seiner Lösestellung gehalten. Die Seile 42 der beiden Übertragungsglieder 40 sind hinreichend gespannt, wenn die Einstellmuttern 66 mit einem Drehmoment von etwa 0,5 Nm angezogen sind. Sodann wird das Betätigungsglied 70 mit einer Handkraft von ungefähr 300 N betätigt. Dabei brechen die beiden Abstandhalter 50 an ihrer Sollbruchstelle 60. Danach sind die beiden Bruchstücke jedes Abstandhalters 50 daran gehindert, sich noch einmal zu berühren, da das mit der federnden Zunge 56 versehene Bruchstück in Folge der Vorspannung dieser Zunge aus der ursprünglichen Stellung wegkippt und dann entweder lose am oberen Arm 48 des Stützgliedes 38 hängen bleibt oder sich zufällig löst oder, falls gewünscht, weggenommen wird.

In Fig. 8 ist die bei der beschriebenen Montage und danach im Seil 42 jedes Übertragungsgliedes 40 auftretende Seilkraft F, gemessen in N, über dem Seilweg S, gemessen in mm, aufgetragen. Ausgehend vom Nullpunkt steigt die Seilkraft F beim Anziehen der Einstellmuttern 66 bis zum Punkt 1. Die dabei auftretende elastische Verformung des Abstandhalters 50 an jeder der beiden Bremsen 10 bewirkt eine vernachlässigbar geringe Längung in der Größenordnung unter 0,1 mm. Wird nun die beschriebene Betätigungskraft von 300 N auf den Handgriff des Betätigungsgliedes 70 aufgebracht, so steigt die Kraft in jedem der beiden Seile 42 bis zum Punkt 2. auf ungefähr 760 N. Bei dieser Belastung brechen die Abstandhalter 50 an ihrer Sollbruchstelle 60 mit der Folge, daß die Seilkräfte F sprunghaft abgebaut werden; sie betragen am Punkt 3. nur mehr knapp 50 N. Die Bremsen 10 haben nun ein vorgesehenes Lüftspiel. Dieses Lüftspiel wird bei einer anschließenden Feststellbremsung überwunden, sobald beim Schwenken des Betätigungsgliedes 70 ein Seilweg von ungefähr 3 mm zurückgelegt worden ist. Vom Punkt 4. an wird in jeder der Bremsen 10 eine Spannkraft aufgebaut.

## Patentansprüche

1. Fahrzeugradbremse mit einem mechanischen Stellglied (36), das an einem Gehäuse (12) der Bremse (10) gelagert, durch ein Übertragungsglied (40) mit einem Betätigungsglied (70) verbindbar und durch dieses für Feststellbremsungen gegen eine Rückstellkraft von einer Ausgangslage wegbewegbar ist, und mit einem Abstandhalter (50), der bis zur ersten mechanischen Betätigung der Bremse (10) nach Montage des Übertragungsgliedes (40) einen vorbestimmten Abstand des Stellgliedes (36) von seiner Ausgangslage aufrechterhält und dabei von der Rückstellkraft auf Druck belastet ist,
dadurch **gekennzeichnet,** daß der Abstandhalter (50) auch zur Übertragung von Zugkräften ausgebildet und am Stellglied (36) sowie an einem gehäusefesten Stützglied (38) befestigt ist und eine Sollbruchstelle (60) aufweist, an der er bei Überschreiten einer vorbestimmten, vom Betätigungsglied (70) über das Übertragungsglied (40) aufbringbaren Kraft bricht und dadurch das Stellglied (36) freigibt.

2. Fahrzeugbremse nach Anspruch 1,
dadurch **gekennzeichnet,** daß der Abstandhalter (50) Aussparungen (52, 54) zum Befestigen am Stellglied (36) und am gehäusefesten Stützglied (38) aufweist.

3. Fahrzeugbremse nach Anspruch 2,
dadurch **gekennzeichnet,** daß eine der Aussparungen (54) des Abstandhalters (50) ein Langloch für eine Schraube (58) zur Befestigung am Stellglied (36) ist.

4. Fahrzeugbremse nach Anspruch 2 oder 3,
dadurch **gekennzeichnet,** daß an einer der Aussparungen (52) eine federnde Zunge (56) ausgebildet ist, die nach der Montage des Abstandhalters (50) unter Spannung steht und nach Zerbrechen des Abstandhalters (50) in zwei Bruchstücke das die Zunge (56) aufweisende Bruchstück von dem anderen Bruchstück wegkippen läßt.

## Claims

1. A vehicle wheel brake having mounted on a housing (12) of the brake (10) a mechanical actuator (36) connectable by a transfer element (40) to an actuating member (70) by which it is movable away from a starting position in overcoming a return force for parking brake action, and a spacer (50) which, until initial mechanical actuation of the brake following assembly of said transfer element (40), maintains said actuator (36) at a specified distance away from its starting position and is thereby pressure-loaded by the return force,
**characterized in that**
said spacer (50) is configured to transfer also tensile forces and is secured to both said actuator (36) and to a supporting member (38) integral with said housing and is designed with a weak point (60) at which it breaks when a specified force applicable by said actuating member (70) via said transfer element (40) is exceeded, thus releasing said actuator (36).

2. The vehicle brake as set forth in claim 1,
wherein said spacer (50) has recesses (52, 54) for securing to said actuator (36) and to said supporting member (38) integral with said housing.

3. The vehicle brake as set forth in claim 2,
wherein one of said recesses (54) of said spacer (50) is a slot for a bolt (58) for securing to said actuator (36).

4. The vehicle brake as set forth in claim 2 or 3,
wherein on one of said recesses (52) a spring tongue (56) is formed which following assembly of said spacer (50) is under tension and following breaking of said spacer (50) into two broken pieces allows the broken piece having said tongue (56) to deflect away from the other broken piece.

## Revendications

1. Frein pour roue de véhicule à moteur, comportant un organe mécanique de réglage (36) monté sur un carter (12) du frein (10), qui peut être relié par un organe de transmission (40) à un organe d'actionnement (70), et qui peut, au moyen de ce dernier, pour des freinages de stationnement, être écarté d'une position initiale en agissant contre une force de rappel,
et comportant un écarteur (50), qui maintient une distance prédéfinie de l'organe mécanique de réglage (36) par rapport à sa position initiale, jusqu'à ce qu'on actionne mécaniquement pour la première fois le frein (10), après montage de l'organe de transmission (40), et qui est soumis à une pression par la force de rappel,
caractérisé en ce que l'écarteur (50) est réalisé pour également transmettre des efforts de traction et est fixé sur l'organe de réglage mécanique (36), ainsi que sur un organe d'appui (38) solidaire du carter, et en ce qu'il présente un point de rupture programmée (60), prévu pour que l'écarteur (50) se brise lors du dépassement d'une force prédéfinie, exercée par l'organe d'actionnement (70) par l'intermédiaire de l'organe de transmission (40), en libérant ainsi l'organe de réglage (36).

2. Frein pour véhicule à moteur suivant la revendication 1, caractérisé en ce que l'écarteur (50) présente des évidements (52, 54) pour la fixation sur l'organe de réglage (36) et sur l'organe d'appui (38) solidaire du carter.

3. Frein pour véhicule à moteur suivant la revendication 2, caractérisé en ce que l'un des évidements (54) de l'écarteur (50) est un trou oblong destiné à recevoir une vis (58) de fixation sur l'organe de réglage (36).

4. Frein pour véhicule à moteur suivant la revendication 2 ou la revendication 3, caractérisé en ce que, sur l'un des évidements (52), est réalisé une languette (56) formant ressort, qui est mise en tension après montage de l'écarteur (50), et qui, après la rupture de l'écarteur (50) en deux parties, éloigne la partie rompue portant la languette (56) de l'autre partie rompue.
